# EUROPEAN PATENT SPECIFICATION

(11) **EP 1 081 350 B1**
(45) Date of publication and mention of the grant of the patent: **27.09.2006**
(21) Application number: 00117653.6
(22) Date of filing: 16.08.2000
(51) Int. Cl.: F02B 23/10, F02F 1/42, F02F 3/26

(54) **Direct fuel injection type spark ignition engine**
Direkteingespritzte fremdgezündete Brennkraftmaschine
Moteur à allumage par étincelle avec injection directe

(30) Priority: 30.08.1999 JP 24248499
(43) Date of publication of application: 07.03.2001
(73) Proprietor: NISSAN MOTOR CO., LTD., Yokohama-shi, Kanagawa 221-0023 (JP)
(72) Inventor: Iriya, Yuichi, Yokohama-shi, Kanagawa 223-0053 (JP); Yamaguchi, Koichi, Yokohama-shi, Kanagawa 244-0843 (JP); Fukuda, Takashi, Yokohama-shi, Kanagawa 236-0033 (JP)
(74) Representative: Weber, Joachim

(56) References cited:
- EP-A- 0 558 072
- EP-A- 0 928 887
- DE-A- 19 705 023
- JP-A- 11 200 866
- PATENT ABSTRACTS OF JAPAN vol. 016, no. 363 (M-1290), 5 August 1992 (1992-08-05) & JP 04 112931 A (TOYOTA MOTOR CORP), 14 April 1992 (1992-04-14)

## Description

### BACKGROUND OF THE INVENTION

The present invention relates to a direct fuel injection type spark ignition engine wherein fuel is injected directly into a combustion chamber to execute or realize a stratified combustion, and particularly to a kind of making use of a tumble flow within a combustion chamber, according to the preamble part of claim 1. Such an engine is known from JP 11 200 866 A.

An example of a prior art direct fuel injection type spark ignition engine is disclosed in Japanese Patent Provisional Publication No. 4-112931. The prior art direct fuel injection type spark ignition engine is provided with a piston having a cavity on the top surface thereof and constructed such that an intake port produces a tumble flow which causes fuel injected into a combustion chamber to be conveyed to a place adjacent a spark plug to be ignited while being prevented from being dispersed. This enables to attain stratification of combustion and therefore improved fuel consumption by making an engine operate on a super lean air-fuel ratio.

### SUMMARY OF THE INVENTION

The prior art direct fuel injection type spark ignition engine has a problem that while it can produce a strong tumble flow for directing the fuel toward the spark plug at a partial load or middle to high speed operation of the engine, the tumble flow is weakened at low speed operation such as idling, thus making it difficult to covey the fuel to the spark plug.

It is accordingly an object of the present invention to provide a direct fuel injection type spark ignition engine which can solve the above noted problem by improving the shape or configuration of a cavity which is formed on the top surface of a piston.

To accomplish the above object, the present invention provides a direct fuel injection type spark ignition engine according to claim 1.

### BRIEF DESCRIPTION OF THE DRAWINGS

Fig. 1 is a cross sectional view of a direct fuel injection type spark ignition engine according to an embodiment of the present invention;
Fig. 2 is a plan view of a combustion chamber of the engine of Fig. 1;
Fig. 3 is a top plan view of a piston of the engine of Fig. 1, the piston having a cavity on the top surface thereof;
Fig. 4 is a sectional view taken along the line IV-IV of Fig. 3;
Figs. 5A and 5B are views for illustrating shapes of an injected fuel spray in a stratified combustion mode of engine operation, wherein Fig. 5A illustrates the shape of an injected fuel shape at a partial load operation of the engine and Fig. 5B illustrates the shape of an injected fuel spray at idling;
Fig. 6 is a view for illustrating a lower limit of a radius R;
Fig. 7A and 7B are views for illustrating deflection of a fuel spray by the effect of the radius R;
Fig. 8 is a view for illustrating the upper limit of the radius R;
Figs. 9A and 9B are views for illustrating an influence of the radius R on a tumble flow;
Fig. 10 is a view for illustrating the position of an intake side end of the cavity of Fig. 3, which is related to the depth of the cavity;
Figs. 11A and 11B are views for illustrating an influence of the intake side end of the cavity of Fig. 3 on an injected fuel spray;
Fig. 12 is a view for illustrating a relation between a protruded portion of the piston and a pent roof type combustion chamber of the engine of Fig. 1;
Figs. 13A and 13B are views for illustrating an influence of the relation of Fig. 12 on a squish flow;
Fig. 14 is a view similar to Fig. 12 but shows another embodiment having a different relation between the piston protruded portion and the pent roof type combustion chamber;
Fig. 15 is a view for illustrating a relation between the protruded portion of the top surface of the piston and the inner wall of the cylinder head;
Figs. 16A to 16D are views for illustrating the influence of the protruded portion of the top surface of the piston of Fig. 15 on a squish flow;
Fig. 17 is a view for illustrating the width of the cavity of the piston of Fig. 3;
Fig. 18 is a sectional view of the piston of Fig. 17;
Fig. 19 is a plan view of a piston having a cavity with rounded corners;
Figs. 20A, 20B and 20C are sectional views taken along the lines XXA-XXA, XXB-XXB and XXC-XXC of Fig. 19;
Fig. 21 is a perspective view of the piston of Fig. 19;
Fig. 22 is a graph of a relation between an angle α and the combustion stability at idling;
Fig. 23 is a graph of a relation between angles β, γ and a combustion stability at partial load;
Fig. 24 is a graph of a relation between a length Lint and a combustion stability at idling; and
Fig. 25 is a graph of a relation between a distance C and a combustion stability in a stratified combustion mode of engine operation.

### DESCRIPTION OF THE PREFERRED EMBODIMENTS

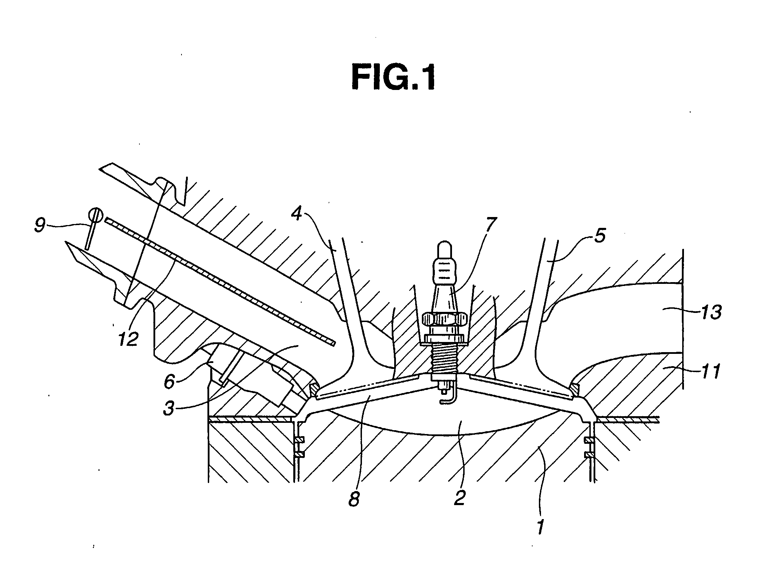

Referring first to Figs. 1 to 4, a direct fuel injection type spark ignition engine according to an embodiment of the present invention will be described.

As shown in Fig. 1, cylinder head 11 has an inner wall and piston 1 has cavity 2 on the top surface thereof. The inner wall of cylinder head 11 and the top surface of piston 1 define pent roof type combustion chamber 8 therebetween. Cavity 2 constitutes a shallow dish-shaped combustion chamber section.

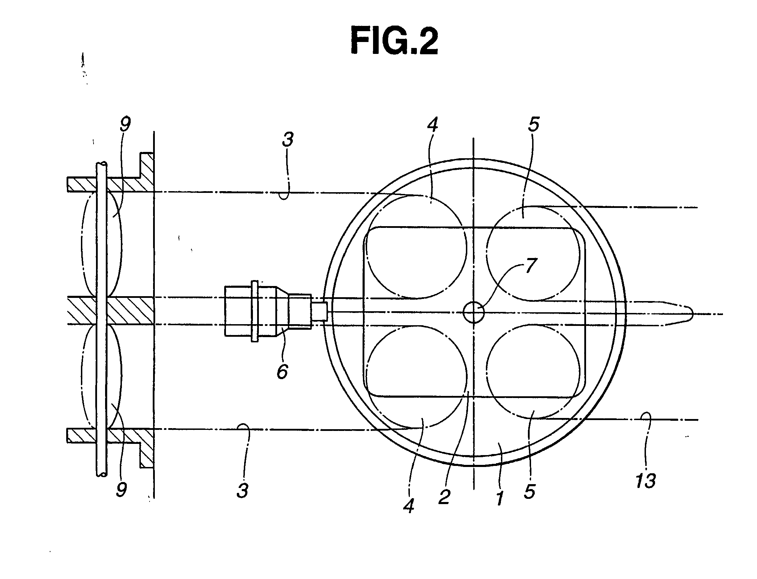

As shown in Fig. 2, each cylinder of the engine is provided with a pair of intake valves 4 and a pair of exhaust valves 5. Accordingly, each cylinder is provided with a pair of intake ports 3 and a pair of tumble control valves 9. Fuel injector 6 is disposed under and intermediate between the pair of intake ports 3 for injecting fuel obliquely downward with respect to pent roof type combustion chamber 8 and directly into the same. Exhaust ports 13 which are opened and closed by exhaust valves 5 are joined together in the midway to constitute a single passage.

Nearly at the center of combustion chamber 8 is disposed spark plug 7 when observed in a plan view of combustion chamber 8. Each intake port 3 is provided with partition wall 12 and tumble control valve 9 which cooperate to constitute a device for generating gas movement such as a tumble flow within combustion chamber 8. Partition wall 12 divides each intake port 3 into upper and lower passages. Tumble control valve 9 controls opening and closing of the upper and lower passages of each intake port 3, whereby to strengthen the tumble flow generated in combustion chamber 8.

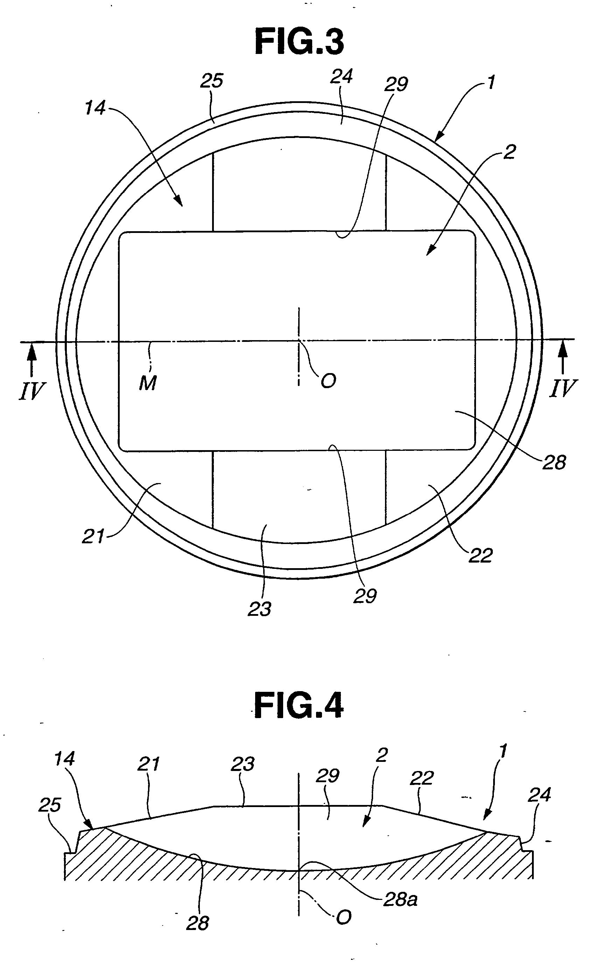

As shown in Figs. 3 and 4, cavity 2 formed on the top surface of piston 1 has a nearly rectangular shape when observed in a plan view of piston 1. The top surface of piston 1 has outwardly protruded potion 14 around cavity 2. Outwardly protruded portion 14 includes intake side inclined surface section 21 and exhaust side inclined surface section 22 which are planar surfaces, horizontal surface section 23 located between inclined surface sections 21 and 22, and conical surface section 24 surrounding surface sections 21, 22 and 23. Around conical surface section 24 is provided annular, horizontal surface section 25 of the width corresponding to a land portion of a piston ring (not shown).

Cavity 2 includes nearly cylindrical bottom surface 28 having such a cross section, which is made by vertical plane M extending through center axis O of piston 1 and between an intake side and an exhaust side of the engine, that approximates to a circular arc of a radius R, and a pair of side surfaces 29 nearly parallel to vertical plane M. Nearly rectangular cavity 2 has longer sides extending in parallel with vertical plane M. The center of radius R is located on center axis O of piston 1 and accordingly deepest portion 28a of bottom surface 28 is positioned at and adjacent the center of piston 1.

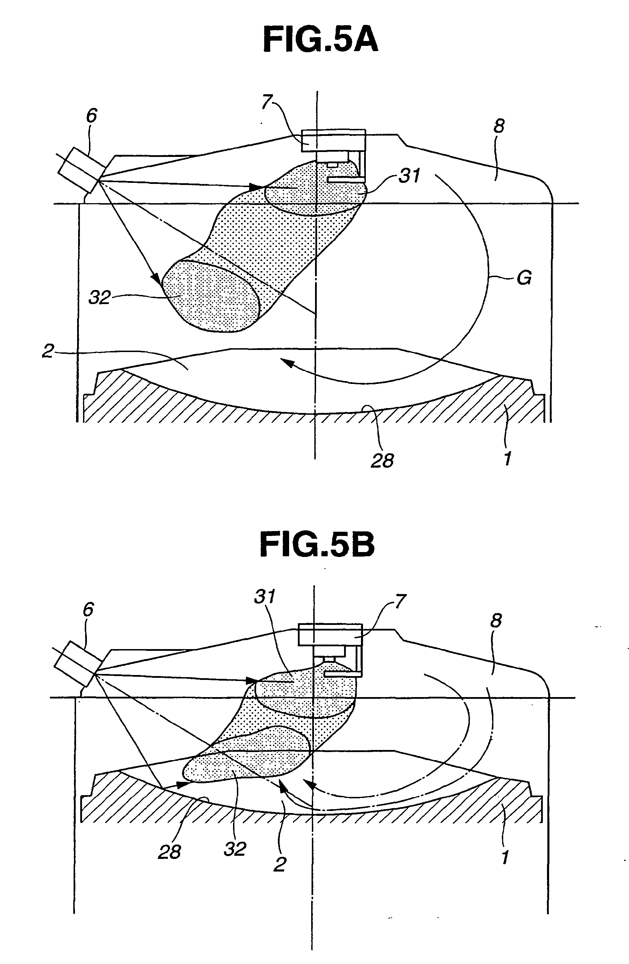

Figs. 5A and 5B illustrate basic operations effected by the foregoing structure. Fig. 5A shows a stratified combustion condition which is attained at a middle to high speed operation of the engine such as a partial load operation in which a sufficiently strong tumble flow is obtained. In this condition, by gas movement of tumble flow G, the spray of injected fuel is collected adjacent spark plug 7. In the meantime, 31 indicates a fuel spray upper end portion, and 32 indicates a fuel spray lower end portion. The spray angle and the direction of injection by fuel injector 6 are determined in consideration of tumble flow G, whereby the fuel spray can be collected adjacent spark plug 7 assuredly to enable a stable engine operation.

On the other hand, in a stratified combustion mode at a low speed operation of the engine such as idling, tumble flow G formed by intake ports 3 is weakened or attenuated, thus making it difficult for fuel spray upper end portion 31 to reach a place adjacent spark plug 7 in such a manner as shown in Fig. 5B. However, at a low speed operation of the engine such as idling, the fuel injection timing is controlled to a delayed side, thus causing fuel spray lower end portion 32 to strike or impinge against bottom face 28 of cavity 2 and be deflected upward and toward combustion chamber 8 where spark plug 7 is located. For this reason, even if gas movement is weak, the fuel spray is collected adjacent spark plug 7 to enable a stable engine operation on stratified combustion.

Accordingly, it becomes possible to attain a stable stratified combustion over a wide range of engine operation from low speed such as idling to middle to high speed, thus making it possible to improve the fuel consumption and exhaust efficiency.

Cavity 2 constituting a shallow dish-shaped combustion chamber section will be described further with respect to its specific structures and effects.

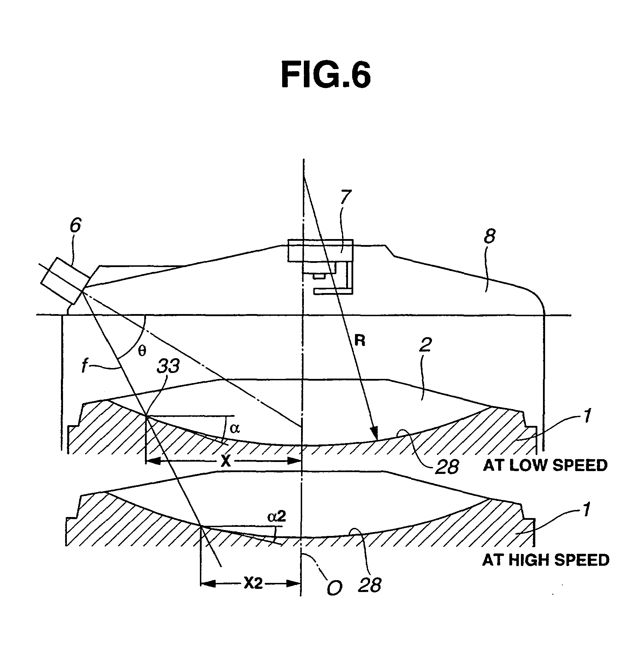

Fig. 6 is a view for illustrating the lower limit of radius R. Let α denotes an inclination angle, with respect to a horizontal plane, of a plane tangential to bottom surface 28 and contacting striking point 33 at which lower peripheral end portion f of a fuel spray strikes against bottom surface 28, when piston 1 is in a position assumed thereby when lower peripheral end portion f of a fuel spray injected at an injection timing (i.e., delayed timing) at a low speed operation of the engine (i.e., at idling) reaches bottom surface 28, inclination angle α is set equal to or smaller than θ/2 where θ is an angle between a line defining spray lower end portion f and a horizontal plane. Namely, let X denote the distance between striking point 33 and piston center axis O, radius R is set equal to or larger than X × sin (θ/2). In the meantime, at a high speed operation of the engine, the ignition timing is advanced so that, as shown in the lower part of Fig. 6, the fuel spray strikes against bottom surface 28 of piston 1 located at a relatively lower position. However, in this instance, the inclination angle α2 of the plane tangential to the striking point is smaller than the above described angle α.

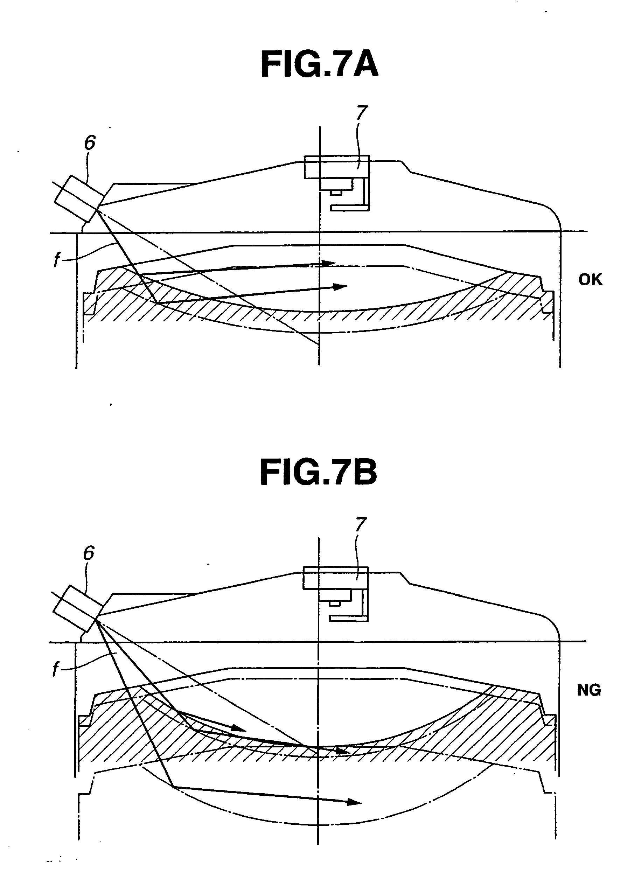

Figs. 7A and 7B are views for illustrating an operation attained by determination of the lower limit of radius R. When radius R is set or determined in the above described manner, lower peripheral end portion f of the fuel spray is necessarily deflected upward, i.e., toward a position higher than a horizontal plane.

In contrast to this, when radius R is excessively small, lower peripheral end portion f of the fuel spray deflects downward, i.e., toward a position lower than a horizontal plane as shown in Fig. 7B, thus weakening the action of collecting the fuel spray adjacent spark plug 7.

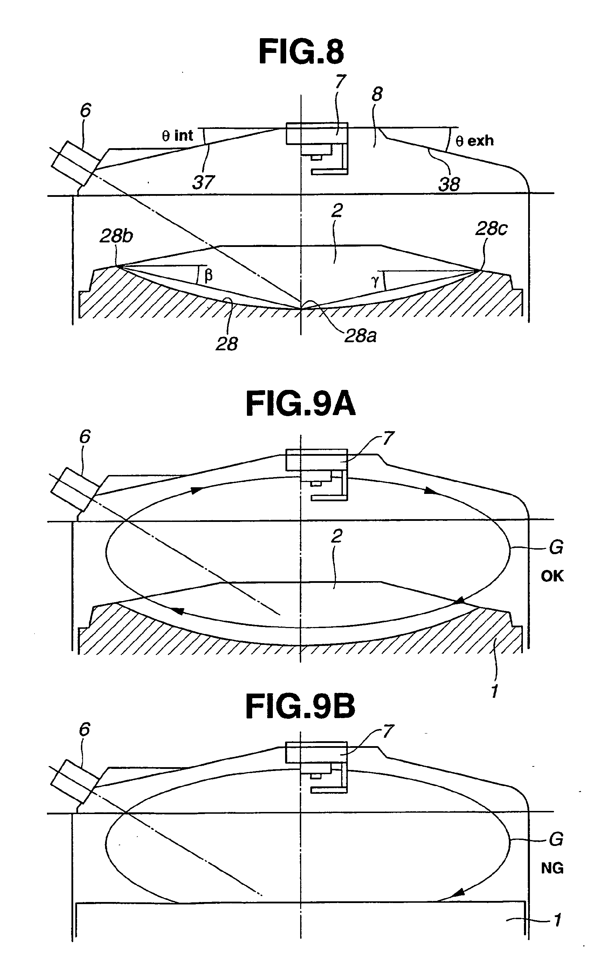

Fig. 8 is a view for illustrating an upper limit of radius R. Radius R is determined so that β≧θint and γ≧θexh where β is an inclination angle of a plane connecting between deepest portion 28a of bottom surface 28 and intake side end 28b of cavity 2 to a horizontal plane, θ int is an inclination angle, with respect to a horizontal plane, of intake side inclined section 37 of the inner wall of cylinder head 11, γ is an inclination angle of a plane connecting between deepest portion 28a of bottom surface 28 and exhaust side end 28c of cavity 2 to a horizontal plane, and θ exh is an inclination angle, with respect to a horizontal plane, of exhaust side inclined section 38 of the inner wall of cylinder head 11.

By setting radius R in the above described manner, cavity 2 is not excessively shallow or bottom surface 28 is not excessively close to a flat surface as shown in Fig. 9A, thus not causing any obstruction to tumble flow G. In contrast to this, in case radius R is excessively large, bottom surface 28 becomes so shallow or so close to a flat surface to obstruct tumble flow G as shown in Fig. 9B.

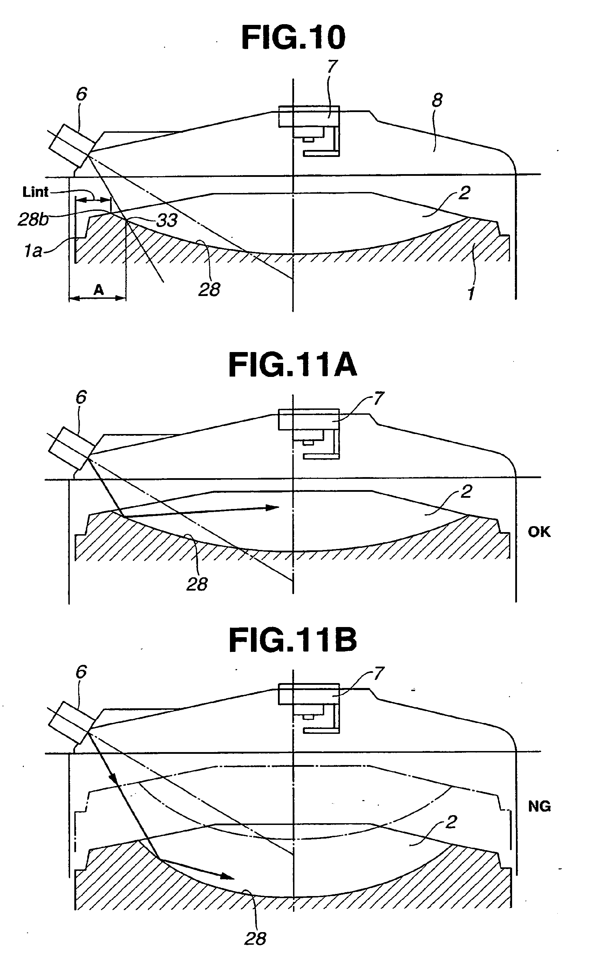

Referring to Fig. 10, the depth of cavity 2 will be described. The depth of cavity 2 is set so that Lint < A where Lint is the distance from outer peripheral edge 1a of piston 1 to intake side end 28b of cavity 2, and A is the distance from outer peripheral edge 1a of piston 1 to striking point 33 at which lower peripheral end portion f of the fuel spray strikes against bottom surface 28, when piston 1 is in a position assumed thereby when lower peripheral end portion f of the fuel spray injected at an injection timing at low speed engine operation (i.e., idling) reaches bottom surface 28.

By setting radius R in the above described manner, the fuel spray is allowed to go into cavity 2 without striking against protruded portion 14 event at a delayed injection timing at idling. In contrast to this, when the depth of cavity 2 is so shallow and accordingly the above described distance Lint becomes so large, the fuel spray is caused to strike against intake side inclined surface section 21 as shown in Fig. 11B.

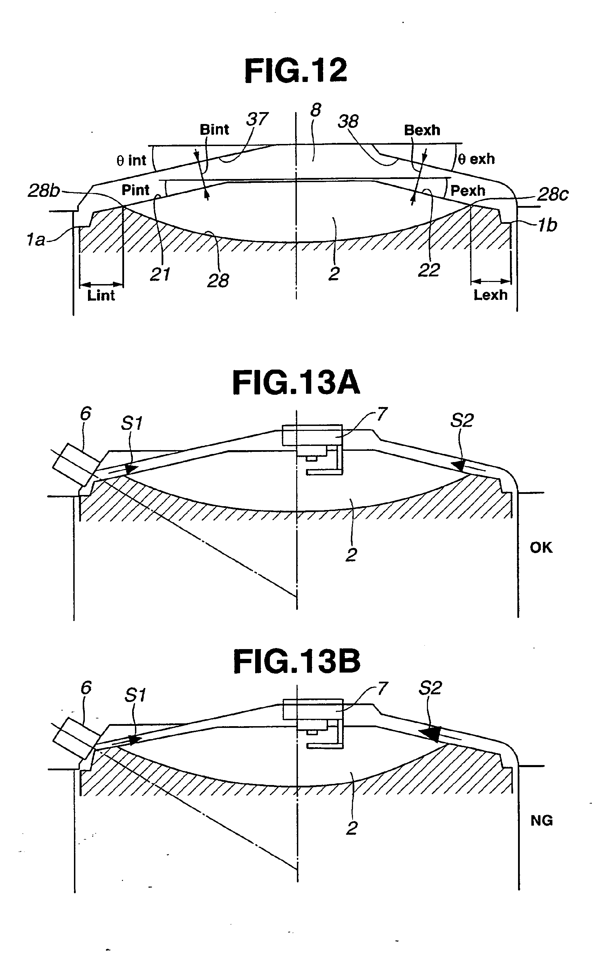

Fig. 12 illustrates a relation between piston 1 and pent roof type combustion chamber 8.

As shown in Fig. 12, let Lexh denote the distance from outer peripheral edge 1b of piston 1 to exhaust side end 28c of cavity 2, distance Lexh is set nearly equal to above described distance Lint from outer peripheral edge 1a of piston 1 to intake side end 28b of cavity 2. Intake side inclined surface section 21 and exhaust side inclined surface section 22 of outwardly protruded portion 14 around cavity 2 are so formed as to be nearly parallel to intake side inclined section 37 and exhaust side inclined section 38 of the inner wall of cylinder head 11. Namely, inclination angle Pint of intake side inclined surface section 21 of the top surface of piston 1 and inclination angle θ int of intake side inclined section 37 of the inner wall of cylinder head 11 are nearly equal to each other, and inclination angle Pexh of exhaust side inclined surface section 22 of the top surface of piston 1 and inclination angle θ exh of exhaust side inclined section 38 of the inner wall of cylinder head 11 are nearly equal to each other. Further, when piston 1 is at the top dead center (TDC), distance Bint between intake side inclined surface section 21 of the top surface of piston 1 and intake side inclined section 37 of the inner wall of cylinder head 11 and distance Bexh between exhaust side inclined surface section 22 of the top surface of piston 11 and exhaust side inclined section 38 of the inner wall of cylinder head 11 are nearly equal to each other.

By this, as shown in Fig. 13A, in a stratified combustion mode at a middle to high speed operation of the engine such as partial load, the intensity of squish flow S1 formed by the intake side squish area and the intensity of squish flow S2 formed by the exhaust side squish area are caused to become nearly equal to each other. Accordingly, gas movement from the strong squish flow side to the weak squish flow side, which is produced by the difference in the intensity between both squish flows, becomes so small, thus allowing the tumble flow generated at intake port 3 to be maintained unchanged and making it possible to prevent a variation of the cycle of gas movement for thereby attaining an engine operation on stable stratified combustion. In contrast to this, in case, for example, exhaust side squish flow S2 is strong as shown in Fig. 13B, the tumble flow is suppressed or restrained, thus making it difficult for the injected fuel spray to reach the point adjacent spark plug 7.

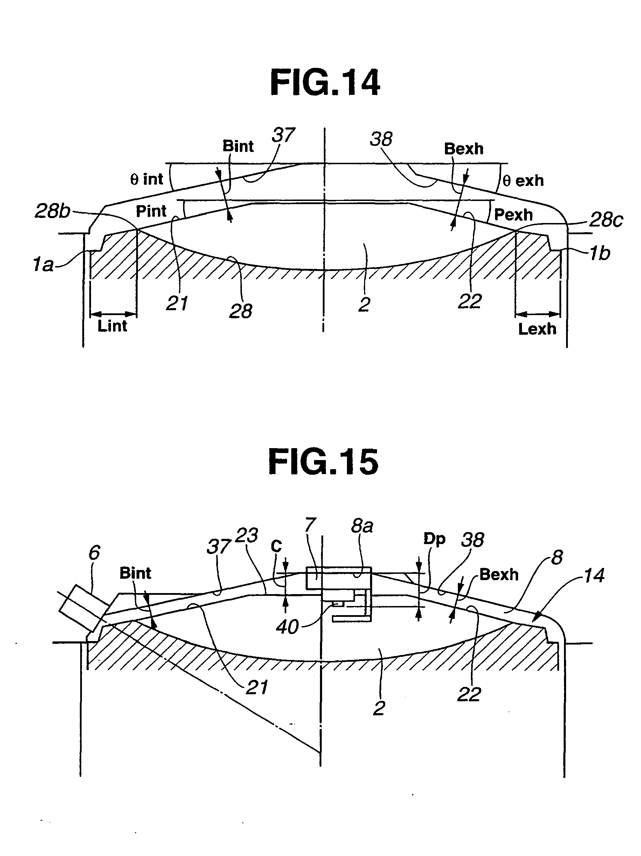

Fig. 14 shows another embodiment in which a relation between piston 1 and pent roof type combustion chamber 8 is modified a little as compared with that of the previous embodiment.

In this embodiment, intake side inclined surface section 21 and exhaust side inclined surface section 22 of protruded portion 14 around cavity 2 are arranged so as to be nearly parallel to intake side inclined section 37 and exhaust side inclined section 38 of the inner wall of cylinder head 11, respectively. Namely, inclination angle Pint of intake side inclined surface section 21 of the top surface of piston 1 and inclination angle θint of intake side inclined section 37 of the inner wall of cylinder head 11 are nearly equal to each other, and inclination angle Pexh of exhaust side inclined surface section 22 of the top surface of piston 1 and inclination angle θ exh of exhaust side inclined section 38 of the inner wall of cylinder head 11 are nearly equal to each other. On the other hand, distance Lexh from exhaust side outer peripheral edge 1b of piston 1 to exhaust side end 28c of cavity 2 is slightly different from distance Lint from intake side outer peripheral edge 1a of piston 1 to intake side end 28b of cavity 2. Further, distance Bint between intake side inclined surface section 21 of the top surface of piston 1 and intake side inclined section 37 of the inner wall of cylinder head 11 and distance Bexh between exhaust side inclined surface section 22 of the top surface of piston 11 and exhaust side inclined section 38 of the inner wall of cylinder head 11 when piston 1 is at the top dead center (TDC) are slightly different from each other. The ratio (Lint/Lexh) of the above described lengths and ratio (Bint/Bexh) of the above described distances on the intake and exhaust sides are set nearly equal to each other.

By such a structure, the squish flow on the intake side and the squish flow on the exhaust side are of equal intensity similarly to those of Figs. 12 and 13A, thus making it possible to attain the same effect.

Fig. 15 illustrates protruded portion 14. As shown in Fig. 15, protruded portion 14 includes horizontal surface section 23 between intake side inclined surface section 21 and exhaust side inclined surface section 22. When piston 1 is at the top dead center, distance C between horizontal surface section 23 and inner top surface section (ridge portion) 8a of cylinder head 11 is set larger than distances Bint and Bexht of the above described intake side and exhaust side inclined surface sections. Further, distance C is set smaller than distance Dp from top section (ridge portion) 8a of the inner wall of cylinder head 11 to a protruded end of center electrode 40 of spark plug 7.

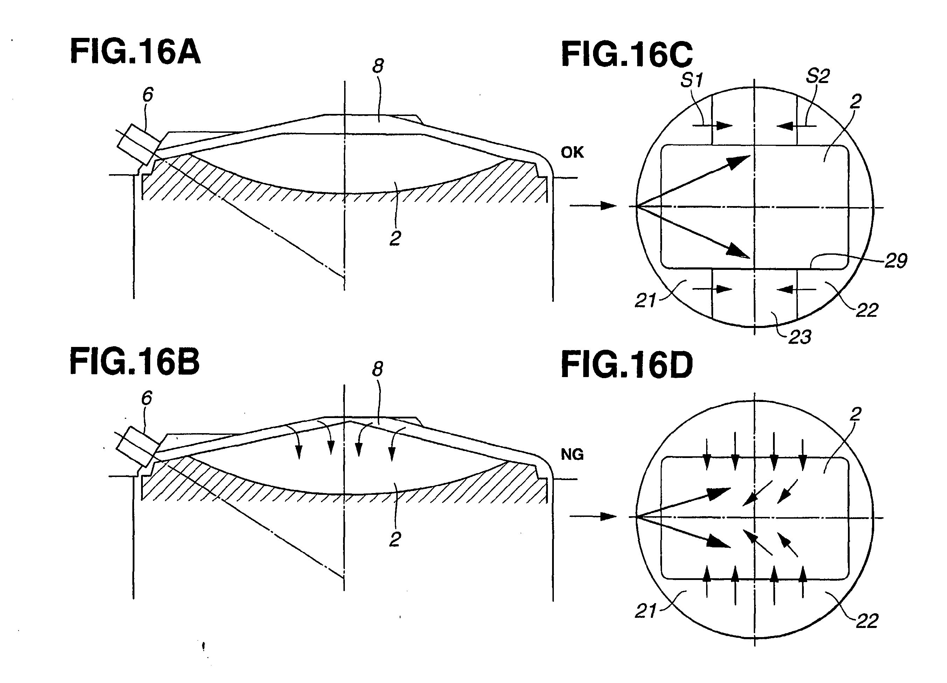

By this, as shown in Figs. 16A and 16C, squish flow S1 generated by the intake side squish area and squish flow S2 generated by the exhaust side squish area are caused to move toward the space above horizontal surface 23 such that the amount of gas flowing crosswise of side surfaces 29 and into cavity 2 is small. Accordingly, in the stratified combustion mode at a middle to high speed operation of the engine such as a partial load operation, the tumble flow generated by intake port 3 is held unchanged, thus making it possible to attain good stratified combustion. In contrast to this, if the space above horizontal surface 28 is small, the squish flow is caused to move across side surfaces 29 and into cavity 2 as shown in Figs. 16B and 16D. Namely, such a gas flow that is perpendicular to the turning plane of the tumble flow is generated, thus inhibiting the tumble flow, making a variation of the cycle larger, lowering the complete penetration force of fuel spray, and making stratified combustion unstable.

Further, since distance C providing the space is smaller than distance Dp to the position where the fuel spray is ignited, the end of center electrode 40 of spark plug 7 is positioned within cavity 2 when piston 1 is at the top dead center, thus making it possible to ignite stratified fuel assuredly.

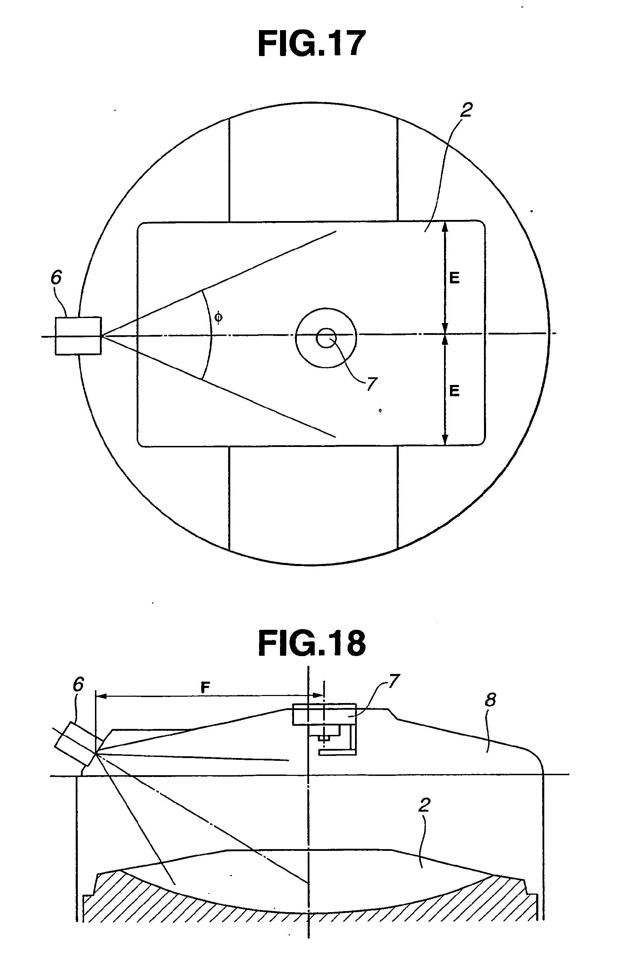

Figs. 17 and 18 illustrate a relation between the size of cavity 2 constituting a shallow dish-shaped combustion chamber section and the spray angle.

As shown in Figs. 17 and 18, fuel is sprayed at predetermined spray angle φ from fuel injector 6. The width of cavity 2 in the form of a nearly rectangular depression is set so that the angle formed by a conical fuel spray in a stratified combustion mode of engine operation is received within the width. That is, let φ denotes the spray angle in a stratified combustion mode of engine operation, E denotes 1/2 of the width of cavity 2 and F denotes distance between spark plug 7 and the nozzle orifice point of fuel injector 6, half width E of combustion chamber section 2 is nearly equal to F × tan (φ/2).

By this, in a stratified combustion mode of engine operation, the fuel spray is prevented from dispersing in the lateral direction but collected at a point around or adjacent spark plug 7, thus making it possible to attain stable combustion.

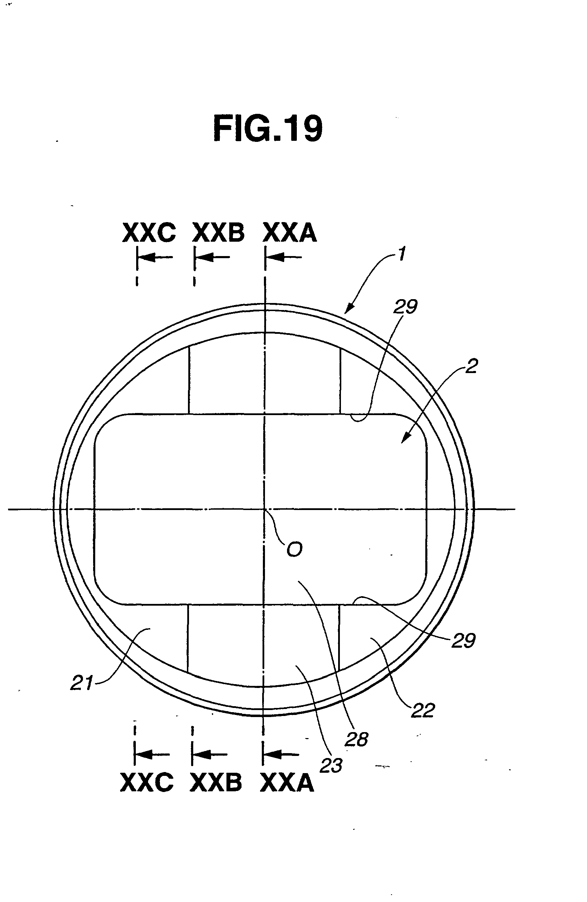

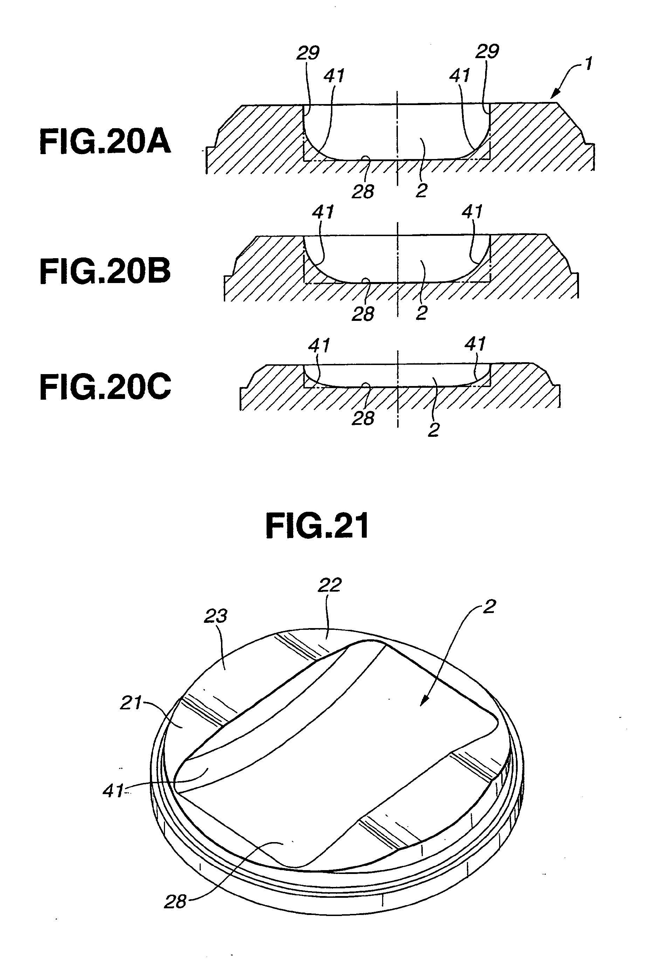

Figs. 19, 20A to 20C and 21 shows a modification wherein cavity 2 have rounded corners.

As shown, in this embodiment, corners 41 between bottom surface 28 and side surface 29 are rounded so as to have a round shape of a suitable radius.

In a stratified combustion mode at a low speed operation of the engine such as idling, the fuel spray strikes against bottom surface 28 of cavity 2 as mentioned above. In this connection, with this modification, the lower peripheral end portion of the fuel spray is deflected toward combustion chamber 8 where spark plug 7 is disposed, by rounded corners 41 and even its component moving laterally of cavity are so deflected. Accordingly, at a low speed operation of the engine in which gas movement is weak, the fuel spray can be collected more at a place adjacent spark plug 7. Further, corners 41 can be used as an adjustable portion for adjustment of the compression ratio.

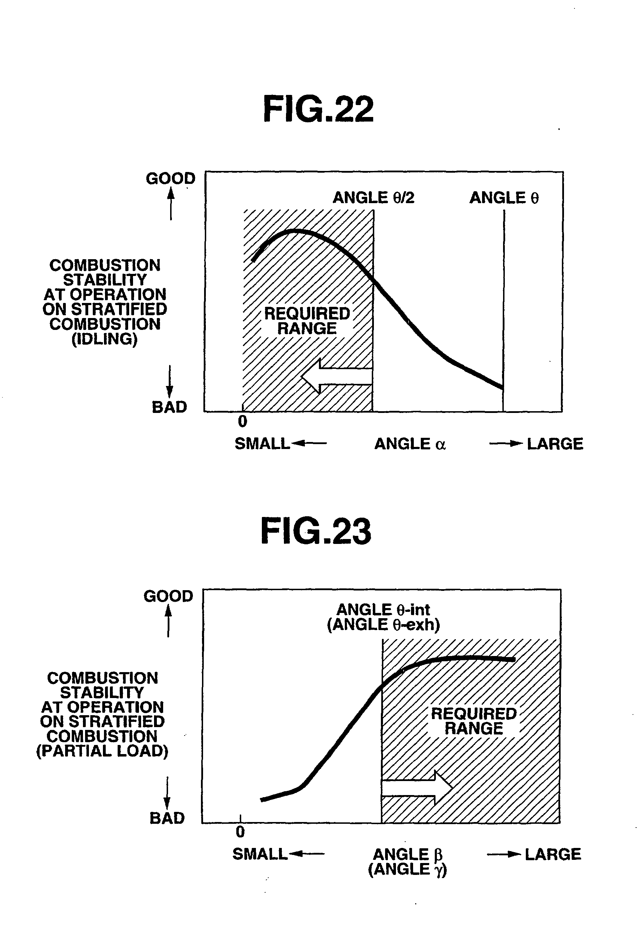

Figs. 22 to 25 are graphs for showing the influence of the above described parameters on the stability of the engine operation on stratified combustion. In either of the graphs, the range of the parameter satisfying the above described requirement is referred to as "required range".

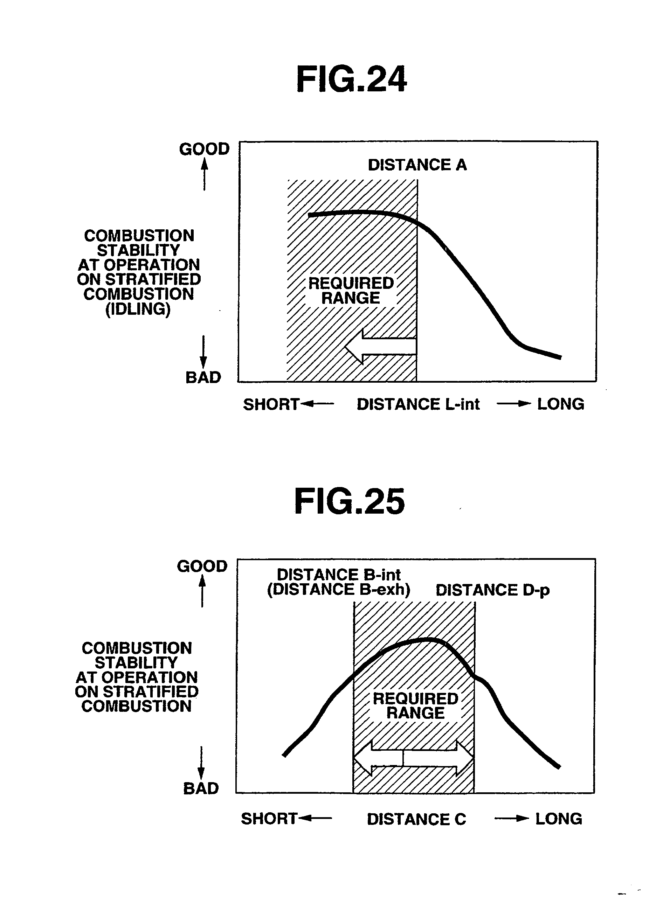

Fig. 22 illustrates the relation between the angle α described with respect to Fig. 6 and the combustion stability. Fig. 23 shows the relation between the angles β, γ described with respect to Fig. 8 and the combustion stability at a partial load operation of the engine. Fig. 24 shows the relation between distance Lint described with respect to Fig. 10 and the combustion stability at idling. Further, Fig. 25 shows distance C described with respect to Fig. 15 and the combustion stability at an engine operation on stratified combustion.

The entire contents of Japanese Patent Application P 11-242484 (filed August 30, 1999) are incorporated herein by reference.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. A direct fuel injection type spark ignition engine comprising:
a cylinder head (11) having an inner wall;
a piston (1) having a cavity (2) on a top surface thereof, the inner wall of said cylinder head (11) and the top surface of said piston (1) defining a pent roof type combustion chamber (8) therebetween;
a fuel injector (6) disposed under an intake port (3) of the engine for injecting fuel directly into and obliquely downward with respect to said combustion chamber (8) ;
a spark plug (3) disposed nearly at the center of said combustion chamber (8); and
a device for generating a tumble flow within said combustion chamber (8) ;
wherein said cavity (2) includes a nearly cylindrical bottom surface (28) having such a cross section, which is formed by a vertical plane extending through the center axis of said piston (1) and between an intake side and an exhaust side of the engine, that approximates to a circular arc of a radius R having a center located on or adjacent the center axis of said piston (1), and a pair of side surfaces (29) nearly parallel to said vertical plane, said cavity (2) being nearly rectangular when observed in a plan view of said piston (1), **characterized in that** said radius R is set so that when said piston (1) is in a position assumed thereby when a fuel spray injected at an injection timing at a low speed operation of the engine reaches the bottom surface (28) of said cavity (2), an inclination angle α, with respect to a horizontal plane, of a plane tangent to the bottom surface (28) of said cavity (2) and contacting a striking point (33) at which a lower peripheral end portion of the fuel spray strikes against the bottom surface (28) of said cavity (2), is set equal to or smaller than θ/2 where θ is an inclination angle of a line defining the lower peripheral end of the fuel spray to a horizontal plane, said radius R being further set so that β ≥ θint and γ ≥ θexh where β is an inclination angle of a plane connecting between a deepest portion (28a) of the bottom surface (28) of said cavity (2) and an intake side end (28b) of said cavity (2) to a horizontal plane, θint is an inclination angle, with respect to a horizontal plane, of an intake side inclined section of the inner wall of said cylinder head (11), γ is an inclination angle of a plane connecting between the deepest portion (28a) of the bottom surface (28) of said cavity (2) and an exhaust side end (28c) of said cavity (2) to a horizontal plane, and θexh is an inclination angle, with respect to a horizontal plane, of an exhaust side inclined section of the inner wall of said cylinder head (11) , and the depth of the deepest portion (28a) of said cavity (2) is set so that Lint < A where Lint is the distance from an outer peripheral edge (1a) of said piston (1) to the intake side end (28b) of said cavity (2) and A is a distance from an outer peripheral edge (1a) of said piston (1) to said striking point (33).

2. A direct fuel injection type spark ignition engine according to claim 1, wherein a distance Lexh from an outer peripheral edge (1a) of said piston (1) to an exhaust side end (28c) of said cavity (2) is nearly equal to said distance Lint, the top surface of said piston (1) having an outwardly protruded portion (14) around said cavity (2), the outwardly protruded portion (14) of the top surface of said piston (1) including an intake side inclined surface section (21) and an exhaust side inclined surface section (22) which are nearly parallel to the intake side inclined section and the exhaust side inclined section of the inner wall of said cylinder head (11), respectively, a distance Bint between the intake side inclined surface section (21) of the top surface of said piston (1) and the intake side inclined section of the inner wall of said cylinder head (11) and a distance Bexh between the exhaust side inclined surface section (22) of the top surface of said piston (1) and the exhaust side inclined section of the inner wall of said cylinder head (11), when said piston (1) is at the top dead center, are nearly equal to each other.

3. A direct fuel injection type spark ignition engine according to claim 1, wherein the top surface of said piston (1) has an outwardly protruded portion (14) around said cavity (2), the outwardly protruded portion (14) of the top surface of said piston (1) including an intake side inclined surface section (21) and an exhaust side inclined surface section (22) which are nearly parallel to the intake side inclined section and the exhaust side inclined section of the inner wall of said cylinder head (11), respectively, a ratio of said distance Lint to a distance Lexh from an outer peripheral edge (1a) of said piston (1) to an exhaust side end (28c) of said cavity (2) is nearly equal to a ratio of a distance Bint between the intake side inclined surface section (21) of the top surface of said piston (1) and the intake side inclined section of the inner wall of said cylinder head (11) to a distance Bexh between the intake side inclined surface section (21) of the top surface of said piston (1) and the exhaust side inclined section of the inner wall of said cylinder head (11), when said piston (1) is at the top dead center.

4. A direct fuel injection type spark ignition engine according to claim 1, wherein the top surface of said piston (1) has an outwardly protruded portion (14) around said cavity (2), the outwardly protruded portion (14) of the top surface of said piston (1) including an intake side inclined surface section (21) and an exhaust side inclined surface section (22) which are nearly parallel to the intake side inclined section and the exhaust side inclined section of the inner wall of said cylinder head (11), respectively, and a horizontal surface section (23) between the intake side inclined surface section (21) and the exhaust side inclined surface section (22) of the top surface of said piston (1), a distance C between the horizontal surface section (23) of the top surface of said piston (1) and a top section of the inner wall of said cylinder head (11) when said piston (1) is at the top dead center being larger than a distance Bint and a distance Bexh while being smaller than a distance Dp wherein said distance Bint is a distance between the intake side inclined surface section (21) of the top surface of said piston (1) and the intake side inclined section of the inner wall of said cylinder head (11), said distance Bexh is a distance between the intake side inclined surface section (21) of the top surface of said piston (1) and the exhaust side inclined section of the inner wall of said cylinder head (11), and said distance Dp is a distance between an end of a center electrode (40) of said spark plug (3) and the top section of the inner wall of said cylinder head (11).

5. A direct fuel injection type spark ignition engine according to claim 1 wherein a width of said cavity (2), extended in the direction perpendicular to said vertical plane is set so as to allow an angle formed by a conical fuel spray in a stratified combustion mode of engine operation to be included within the width of said cavity (2).

6. A direct fuel injection type spark ignition engine according to claim 5, wherein let E denotes a half of said width, φ denote a spray angle in a stratified combustion mode of engine operation and F denote a distance between a nozzle orifice point of said fuel injector (6) and said spark plug (3), said half width E is nearly equal to F x tan(φ/2).

7. A direct fuel injection type spark ignition engine according to claim 1, wherein said cavity (2) has a rounded corner (41) between the bottom surface (28) and one of the side surfaces (29) thereof.

## Patentansprüche

1. Direkteingespritzte fremdgezündete Brennkraftmaschine:
mit einem Zylinderkopf (11), der eine innere Wand aufweist;
mit einem Kolben (1) mit einer Vertiefung (2) auf einer Oberseite davon, wobei die innere Wand des Zylinderkopfs (11) und die Oberseite des Kolbens (1) dazwischen einen Pultdach-Brennraumtyp (8) definieren;
mit einem Kraftstoffinjektor (6), der unter einer Einlassöffnung (3) des Motors angeordnet ist, um Kraftstoff direkt hinein und bezüglich des Brennraums (8) schräg nach unten einzuspritzen;
mit einer Zündkerze (3), die fast in der Mitte des Brennraums (8) angeordnet ist; und
mit einer Vorrichtung zur Erzeugung einer Tumble-Strömung im Inneren des Brennraums (8);
wobei die Vertiefung (2) eine nahezu zylindrische Bodenfläche (28), die einen solchen Querschnitt aufweist, der durch eine vertikale Ebene ausgebildet ist, die sich durch die Mittelachse des Kolbens (1) und zwischen einer Einlassseite und einer Auslassseite des Motors erstreckt, die in etwa einem Kreisbogen eines Radius R mit einem Mittelpunkt entspricht, der auf oder neben der Mittelachse des Kolbens (1) angeordnet ist, und ein Paar von Seitenflächen (29) nahezu parallel zur vertikalen Ebene umfasst, wobei die Vertiefung (2) nahezu rechtwinklig ist, wenn sie in einer Draufsicht des Kolbens (1) betrachtet wird, **dadurch gekennzeichnet, dass** der Radius R so festgelegt ist, dass wenn der Kolben (1) dabei in einer angenommenen Position ist, wenn ein eingespritztes Kraftstoffspray bei einem Einspritzzeitpunkt bei einem langsamen Drehzahlbetrieb des Motors die Bodenfläche (28) der Vertiefung (2) erreicht, ein Neigungswinkel α, der bezüglich einer horizontalen Ebene einer Ebenentangente zur Bodenfläche (28) der Vertiefung (2) und eines Auftreffpunkts (33), an dem ein unterer peripherer Endbereich des Kraftstoffsprays gegen die Bodenfläche (28) der Vertiefung (2) trifft, auf kleiner oder gleich θ/2 festgelegt ist, wobei θ ein Neigungswinkel einer Linie ist, die das untere periphere Ende des Kraftstoffsprays zu einer horizontalen Ebene definiert, wobei der Radius R zudem so festgelegt ist, dass β ≥ θint und γ ≥ θexh ist, wobei β ein Neigungswinkel einer Ebene ist, die eine Verbindung zwischen einem tiefsten Bereich (28a) der Bodenfläche (28) der Vertiefung (2) und einem Einlassseitenende (28b) der Vertiefung (2) zu einer horizontalen Ebene herstellt, θint ein Neigungswinkel bezüglich einer horizontalen Ebene eines geneigten Einlassseiten-Abschnitts der inneren Wand des Zylinderkopfs (11) ist, γ ein Neigungswinkel einer Ebene ist, die eine Verbindung zwischen dem tiefsten Bereich (28a) der Bodenfläche (28) der Vertiefung (2) und einem Auslassseiten-Ende (28c) der Vertiefung (2) zu einer horizontalen Ebene herstellt und θexh ein Neigungswinkel bezüglich einer horizontalen Ebene eines geneigten Auslassseiten-Abschnitts der inneren Wand des Zylinderkopfs (11) ist, und die Tiefe des tiefsten Bereichs (28a) der Vertiefung (2) so festgelegt ist, dass Lint < A ist, wobei Lint der Abstand von einer äußeren peripheren Kante (1a) des Kolbens (1) zum EinlassseitenEnde (28a) der Vertiefung (2) ist und A ein Abstand von einer äußeren peripheren Kante (1a) des Kolbens (1) zum Auftreffpunkt (33) ist.

2. Direkteingespritzte fremdgezündete Brennkraftmaschine gemäß Anspruch 1, wobei ein Abstand Lexh von einer äußeren peripheren Kante (1a) des Kolbens (1) zu einem Auslassseiten-Ende (28c) der Vertiefung (2) nahezu gleich zum Abstand Lint ist, die Oberseite des Kolbens (1) einen nach außen herausragenden Bereich (14) um die Vertiefung (2) aufweist, der nach außen herausragende Bereich (14) der Oberseite des Kolbens (1) einen geneigten Einlassseiten-Oberflächenabschnitt (21) und einen geneigten Auslassseiten-Oberflächenabschnitt (22) umfasst, die nahezu parallel zum geneigten Einlassseiten-Abschnitt bzw. dem geneigten Auslassseiten-Abschnitt der inneren Wand des Zylinderkopfs (11) sind, einen Abstand Bint zwischen dem geneigten Einlassseiten-Oberflächenabschnitt (21) der Oberseite des Kolbens (1) und dem geneigten Einlassseiten-Abschnitt der inneren Wand des Zylinderkopfs (11) und einen Abstand Bexh zwischen dem geneigten Auslassseiten-Oberflächenabschnitt (22) der Oberseite des Kolbens (1) und dem geneigten Auslassseiten-Abschnitt der inneren Wand des Zylinderkopfs (11) umfasst, die zueinander fast gleich sind, wenn der Kolben (1) am oberen Totpunkt ist.

3. Direkteingespritzte fremdgezündete Brennkraftmaschine gemäß Anspruch 1, wobei die Oberseite des Kolbens (1) einen nach außen herausragenden Bereich (14) um die Vertiefung (2) aufweist, der nach außen herausragende Bereich (14) der Oberseite des Kolbens (1) einen geneigten Einlassseiten-Oberflächenabschnitt (21) und einen geneigten Auslassseiten-Oberflächenabschnitt (22) umfasst, die nahezu parallel zum geneigten Einlassseiten-Abschnitt bzw. dem geneigten Auslassseiten-Abschnitt der inneren Wand des Zylinderkopfs (11) sind, wobei ein Verhältnis des Abstandes Lint zu einem Abstand Lexh von einer äußeren peripheren Kante (1a) des Kolbens (1) zu einem Auslassseiten-Ende (28c) der Vertiefung (2) nahezu gleich einem Verhältnis eines Abstandes Bint zwischen dem geneigten Einlassseiten-Oberflächenabschnitt (21) der Oberseite des Kolbens (1) und dem geneigten Einlassseiten-Abschnitt der inneren Wand des Zylinderkopfs (11) zu einem Abstand Bexh zwischen dem geneigten Einlassseiten-Oberflächenabschnitt (21) der Oberseite des Kolbens (1) und dem geneigten Auslassseiten-Abschnitt der inneren Wand des Zylinderkopfs (11) ist, wenn der Kolben (1) am oberen Totpunkt ist.

4. Direkteingespritzte fremdgezündete Brennkraftmaschine gemäß Anspruch 1, wobei die Oberseite des Kolbens (1) einen nach außen herausragenden Bereich (14) um die Vertiefung (2) aufweist, der nach außen herausragende Bereich (14) der Oberseite des Kolbens (1) einen geneigten Einlassseiten-Oberflächenabschnitt (21) und einen geneigten Auslassseiten-Oberflächenabschnitt (22) umfasst, die nahezu parallel zum geneigten Einlassseiten-Abschnitt bzw. dem geneigten Auslassseiten-Abschnitt der inneren Wand des Zylinderkopfs (11) sind, und einen horizontalen Oberflächenabschnitt (23) zwischen dem geneigten Einlassseiten-Oberflächenabschnitt (21) und dem geneigten Auslassseiten-Oberflächenabschnitt (22) der Oberseite des Kolbens (1) umfasst, einen Abstand C zwischen dem horizontalen Oberflächenabschnitt (23) der Oberseite des Kolbens (1) und einem oberen Abschnitt der inneren Wand des Zylinderkopfs (11) umfasst, wenn der Kolben (1) am oberen Totpunkt ist, der größer als ein Abstand Bint und ein Abstand Bexh ist, während er kleiner als ein Abstand Dp ist, wobei der Abstand Bint ein Abstand zwischen dem geneigten Einlassseiten-Oberflächenabschnitt (21) der Oberseite des Kolbens (1) und dem geneigten Einlassseiten-Abschnitt der inneren Wand des Zylinderkopfs (11) ist, wobei der Abstand Bexh ein Abstand zwischen dem geneigten Einlassseiten-Oberflächenabschnitt (21) der Oberseite des Kolbens (1) und dem geneigten Auslassseiten-Abschnitt der inneren Wand des Zylinderkopfs (11) ist und der Abstand Dp ein Abstand zwischen einem Ende einer Mittelelektrode (40) der Zündkerze (3) und dem oberen Abschnitt der inneren Wand des Zylinderkopfs (11) ist.

5. Direkteingespritzte fremdgezündete Brennkraftmaschine gemäß Anspruch 1, wobei die Breite der sich in senkrechter Richtung zur vertikalen Ebene erstreckenden Vertiefung (2) so festgelegt ist, dass sie einem durch ein konisches Kraftstoffspray ausgebildeten Winkel bei einem geschichteten Verbrennungsmodus eines Motorbetriebs ermöglicht, innerhalb der Breite der Vertiefung (2) zu liegen.

6. Direkteingespritzte fremdgezündete Brennkraftmaschine gemäß Anspruch 5, wobei E eine Hälfte der Breite kennzeichnet, φ einen Spraywinkel bei einem geschichteten Verbrennungsmodus eines Motorbetriebs kennzeichnet und F einen Abstand zwischen einem Düsen-Öffnungspunkt des Kraftstoffinjektors (6) und der Zünderkerze (2) kennzeichnet, wobei die halbe Breite E ungefähr gleich F x tan(φ/2) ist.

7. Direkteingespritzte fremdgezündete Brennkraftmaschine gemäß Anspruch 1, wobei die Vertiefung (2) eine abgerundete Ecke (41) zwischen der Bodenfläche (28) und einer deren Seitenflächen (29) aufweist.

## Revendications

1. Moteur à allumage par étincelle du type à injection directe de carburant, comprenant :
une culasse (11) comprenant une paroi interne ;
un piston (1) ayant une cavité (2) sur une surface supérieure de celui-ci, la paroi interne de ladite culasse (11) et la surface supérieure dudit piston (1) définissant une chambre de combustion du type à toit en appentis (8) entre elles ;
un injecteur de carburant (6) placé sous un orifice d'admission (3) du moteur pour injecter du carburant directement à l'intérieur de, et obliquement vers le bas par rapport à, ladite chambre de combustion (8) ;
une bougie d'allumage (3) placée pratiquement au centre de ladite chambre de combustion (8) ; et
un dispositif permettant de créer un flux à tourbillon transversal à l'intérieur de ladite chambre de combustion (8) ;
dans lequel ladite cavité (2) comprend une surface inférieure pratiquement cylindrique (28) ayant une telle section transversale, qui est formée par un plan vertical s'étendant à travers l'axe central dudit piston (1) et entre un côté d'admission et un côté d'échappement du moteur, qui ressemble à un arc circulaire d'un rayon R ayant un centre disposé sur ou adjacent à l'axe central dudit piston (1), et une paire de faces latérales (29) qui sont presque parallèles au dit plan vertical, ladite cavité (2) étant presque rectangulaire quand on la voit en plan par rapport au dit piston (1), **caractérisé en ce que** ledit rayon R est défini de telle sorte que quand ledit piston (1) est dans une position prise par lui quand une pulvérisation de carburant injecté à un rythme d'injection à un fonctionnement à bas régime du moteur atteint la surface inférieure (28) de ladite cavité (2), un angle d'inclinaison α, par rapport à un plan horizontal, d'une tangente par rapport à la surface inférieure (28) de ladite cavité (2) et en contact avec un point de frappe (33) au niveau duquel une partie d'extrémité périphérique inférieure de la pulvérisation de carburant frappe contre la surface inférieure (28) de ladite cavité (2), est défini à une valeur égale ou inférieure à θ/2 où θ est un angle d'inclinaison d'une ligne définissant l'extrémité périphérique inférieure de la pulvérisation de carburant par rapport à un plan horizontal, ledit rayon R étant par ailleurs défini de telle sorte que β ≥ θint et γ ≥ θexh où β est un angle d'inclinaison d'un plan connectant entre une partie la plus profonde (28a) de la surface inférieure (28) de ladite cavité (2) et une extrémité du côté d'admission (28b) de ladite cavité (2) par rapport à un plan horizontal, θint est un angle d'inclinaison, par rapport à un plan horizontal, d'une section inclinée d'un côté d'admission de la paroi interne de ladite culasse (11), γ est un angle d'inclinaison d'un plan connectant entre la partie la plus profonde (28a) de la surface inférieure (28) de ladite cavité (2) et une extrémité du côté d'échappement (28c) de ladite cavité (2) par rapport à un plan horizontal, et θexh est un angle d'inclinaison, par rapport à un plan horizontal, d'une section inclinée d'un côté d'échappement de la paroi interne de ladite culasse (11), et la profondeur de la partie la plus profonde (28a) de ladite cavité (2) est définie de telle sorte que Lint < A où Lint correspond à la distance depuis un bord périphérique extérieur (1a) dudit piston (1) jusqu'à une extrémité du côté d'admission (28b) de ladite cavité (2) et A est une distance depuis un bord périphérique extérieur (1a) dudit piston (1) jusqu'au dit point de frappe (33).

2. Moteur à allumage par étincelle du type à injection directe de carburant selon la revendication 1, dans lequel une distance Lexh depuis un bord périphérique extérieur (1a) dudit piston (1) jusqu'à une extrémité du côté d'échappement (28c) de ladite cavité (2) est presque égale à ladite distance Lint, la surface supérieure dudit piston (1) comportant une partie qui fait saillie vers l'extérieur (14) autour de ladite cavité (2), la partie faisant saillie vers l'extérieur (14) de la surface supérieure dudit piston (1) comprenant une section de surface inclinée du côté d'admission (21) et une section de surface inclinée du côté d'échappement (22) qui sont presque parallèles à la section inclinée du côté d'admission et à la section inclinée du côté d'échappement de la paroi interne de ladite culasse (11), respectivement, une distance Bint entre la section de surface inclinée du côté d'admission (21) de la surface supérieure dudit piston (1) et la section inclinée du côté d'échappement de la paroi interne de ladite culasse (11) et une distance Bexh entre la section de surface inclinée du côté d'échappement (22) de la surface supérieure dudit piston (1) et la section inclinée du côté d'échappement de la paroi interne de ladite culasse (11), quand ledit piston (1) est au point mort haut, sont presque égales l'une à l'autre.

3. Moteur à allumage par étincelle du type à injection directe de carburant selon la revendication 1, dans lequel la surface supérieure dudit piston (1) comporte une partie qui fait saillie vers l'extérieur (14) autour de ladite cavité (2), la partie faisant saillie vers l'extérieur (14) de la surface supérieure dudit piston (1) comprenant une section de surface inclinée du côté d'admission (21) et une section de surface inclinée du côté d'échappement (22) qui sont presque parallèles à la section inclinée du côté d'admission et à la section inclinée du côté d'échappement de la paroi interne de ladite culasse (11), respectivement, un rapport de ladite distance Lint à une distance Lexh depuis un bord périphérique extérieur (1 a) dudit piston (1) jusqu'à une extrémité du côté d'échappement (28c) de ladite cavité (2) est presque égale à un rapport d'une distance Bint entre la section de surface inclinée du côté d'admission (21) de la surface supérieure dudit piston (1) et la section inclinée du côté d'admission de la paroi interne de ladite culasse (11) à une distance Bexh entre la section de surface inclinée du côté d'admission (21) de la surface supérieure dudit piston (1) et la section inclinée du côté d'échappement de la paroi interne de ladite culasse (11), quand ledit piston (1) est au point mort haut.

4. Moteur à allumage par étincelle du type à injection directe de carburant selon la revendication 1, dans lequel la surface supérieure dudit piston (1) comporte une partie qui fait saillie vers l'extérieur (14) autour de ladite cavité (2), la partie faisant saillie vers l'extérieur (14) de la surface supérieure dudit piston (1) comprenant une section de surface inclinée du côté d'admission (21) et une section de surface inclinée du côté d'échappement (22) qui sont presque parallèles à la section inclinée du côté d'admission et à la section inclinée du côté d'échappement de la paroi interne de ladite culasse (11), respectivement, et une section de surface horizontale (23) entre la section de surface inclinée du côté d'admission (21) et la section de surface inclinée du côté d'échappement (22) de la surface supérieure dudit piston (1), une distance C entre la section de surface horizontale (23) de la surface supérieure dudit piston (1) et une section supérieure de la paroi interne de ladite culasse (11) quand ledit piston (1) est au point mort haut étant plus grande qu'une distance Bint et une distance Bexh tout en étant plus petite qu'une distance Dp, dans lequel ladite distance Bint est une distance entre la section de surface inclinée du côté d'admission (21) de la surface supérieure dudit piston (1) et la section inclinée du côté d'admission de la paroi interne de ladite culasse (11), ladite distance Bexh est une distance entre la section de surface inclinée du côté d'admission (21) de la surface supérieure dudit piston (1) et la section inclinée du côté d'échappement de la paroi interne de ladite culasse (11), et ladite distance Dp est une distance entre une extrémité d'une électrode centrale (40) de ladite bougie d'allumage (3) et la section supérieure de la paroi interne de ladite culasse (11).

5. Moteur à allumage par étincelle du type à injection directe de carburant selon la revendication 1 dans lequel une largeur de ladite cavité (2), qui se prolonge dans la direction perpendiculaire au dit plan vertical est définie de façon à permettre à un angle formé par une pulvérisation de carburant conique dans un mode de combustion stratifiée d'un fonctionnement du moteur d'être inclus à l'intérieur de la largeur de ladite cavité (2).

6. Moteur à allumage par étincelle du type à injection directe de carburant selon la revendication 5, dans lequel E désigne une moitié de ladite largeur, φ désigne un angle de pulvérisation dans un mode de combustion stratifiée d'un fonctionnement du moteur et F désigne une distance entre un point d'orifice d'injection dudit injecteur de carburant (6) et ladite bougie d'allumage (3), ladite moitié de largeur E étant presque égal à F × tan (φ/2).

7. Moteur à allumage par étincelle du type à injection directe de carburant selon la revendication 1, dans lequel ladite cavité (2) présente un coin arrondi (41) entre la surface inférieure (28) et une des surfaces latérales (29) de celle-ci.
